# EUROPEAN PATENT APPLICATION

(11) **EP 2 192 755 A1**
(43) Date of publication of application: **02.06.2010**
(21) Application number: 08830450.6
(22) Date of filing: 11.09.2008
(51) Int. Cl.: H04M 3/00, H04L 12/56

(54) **COMMUNICATION SYSTEM, COMMUNICATION OPTIMIZING APPARATUS AND COMMUNICATION NETWORK ESTABLISHING METHOD USED IN THEM**

(30) Priority: 12.09.2007 JP 2007236065
(71) Applicant: Nec Corporation, Tokyo 108-8001 (JP)
(72) Inventor: NAKAYAMA, Yoshitaka, Tokyo 108-8001 (JP); MINAMIZAWA, Takeaki, Tokyo 108-8001 (JP); MATSUMOTO, Koichi, Tokyo 108-8001 (JP)
(74) Representative: Glawe, Delfs, Moll
(86) International application number: PCT/JP2008/066410
(87) International publication number: WO 2009/035030

(57) **Abstract**

A communication system in which the user can perform communication via a network, without installing any dedicated applications or performing any special settings to his or her terminal.

The communication system has a communication optimizing apparatus 4 that performs, when a user terminal (PC terminal 3-1, 3-2) accesses a server (Web server 1) via an access-controlled network (network of carrier B), settings and processes required for obtaining a permission of using the network. The communication optimizing apparatus 4 automatically performs the processes required when the network is used.

In this way, the user can perform communication using the network.

## Description

### TECHNICAL FIELD

### [Reference to Related Application]

The present invention is based upon and claims the benefit of the priority of Japanese patent application No. 2007-236065, filed on September 12, 2007, the disclosure of which is incorporated herein in its entirety by reference thereto.
The present invention relates to a communication system, a communication optimizing apparatus, and a communication network establishing method used in them. In particular, it relates to a communication network establishing method used when a terminal device accesses a server via a carrier network.

### BACKGROUND ART

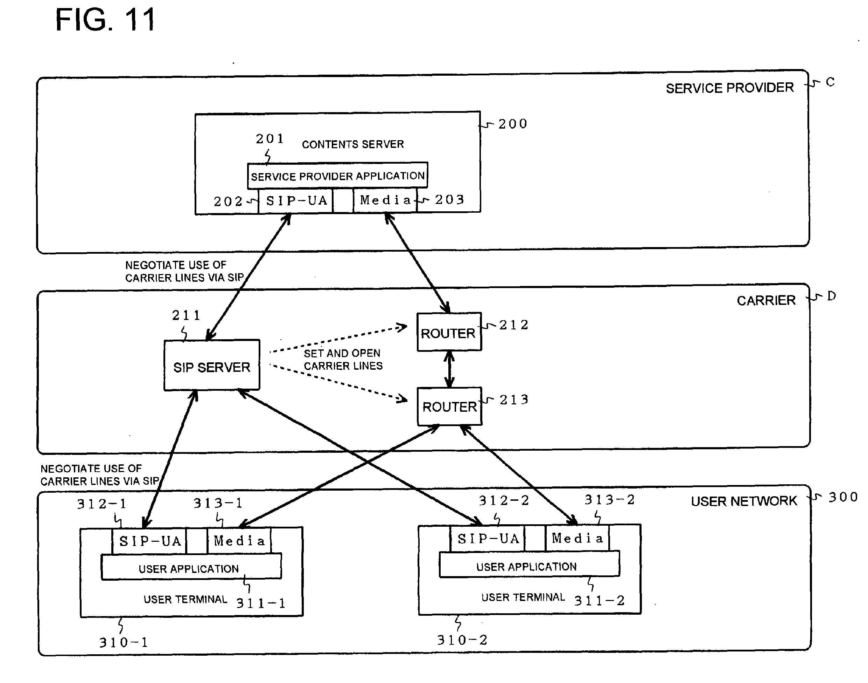

Generally, as illustrated in Fig. 11, based on a communication network establishing method, when user terminals 310-1 and 310-2 in a user network 300 access a content server 200 of a service provider C via an access-controlled carrier network, the user terminals use a session initiation protocol (SIP) to perform a negotiation regarding settings of the carrier network. After the user terminals establish a SIP session with the content server 200 of the service provider C, lines of carrier D are made available, and the user terminals 310-1 and 310-2 perform media communication via available lines of the carrier D.

In Fig. 11, the service provider C includes the content server 200, and the content server 200 includes a service provider application 201, a SIP-User Agent (UA) 202, and a media 203. The carrier D includes a SIP server 211 and routers 212 and 213.

The user terminals 310-1 and 310-2 in the user network 300 include user applications 311-1 and 311-2, SIP-UAs 312-1 and 312-2, and media 313-1 and 313-2, respectively.

The content server 200 uses the SIP-UA 202 to negotiate with the SIP server 211 of the carrier D regarding carrier lines based on the SIP, and the user terminals 310-1 and 310-2 use the SIP-UAs 312-1 and 312-2 to negotiate with the SIP server 211 of the carrier D regarding carrier lines based on the SIP.

Consequently, after the SIP server 211 controls the routers 212 and 213 to set and open the carrier lines and establishes a SIP session, the content server 200 and the user terminals 310-1 and 310-2 perform media communication through lines of the carrier D made available via the routers 212 and 213.

However, to perform the above negotiations, in addition to a protocol such as a hyper text transfer protocol (HTTP), the user terminals need to acquire the SIP protocol and information required to establish a SIP session in advance.

The following Patent Documents 1 and 2 discuss a method for making communication lines available by acquiring a SIP-uniform resource identifier (URI) based on a uniform resource locator (URL) of a content server accessed and establishing a SIP session.
Patent Document 1: Japanese Patent Kokai Publication No. JP-P2006-352753 A
Patent Document 2: Japanese Patent Kokai Publication No. JP-P2005-012655 A

### DISCLOSURE OF THE INVENTION

### PROBLEMS TO BE SOLVED BY THE INVENTION

The entire disclosures of the above Patent Documents 1 and 2 are incorporated herein by reference thereto. The related techniques will be hereinafter analyzed based on the present invention. However, according to either method discussed in the above Patent Documents 1 and 2, a SIP-URI is obtained by converting a full qualified domain name (FQDN) based on a predetermined policy, resulting in a lack of flexibility.

For example, while a host name and a domain name are extracted from a URL and converted to a SIP-URI according to the above methods, detailed option fields cannot be specified, and as a result, when communication lines are acquired, flexible settings cannot be made. In addition, according to the above methods, a URL is converted to a SIP-URI. Thus, when a user agent server (SIP-UAS) connected to make lines of a carrier network available is a SIP-URI that cannot be obtained from a URL, the above methods cannot be used.

It is an object of the present invention to solve the above problems, namely, to provide a communication system, a communication optimizing apparatus, and a communication network establishing method used in them, wherein the user can perform communication by using lines of a carrier network, without installing any dedicated applications or performing any special settings to his or her terminal.

### MEANS TO SOLVE THE PROBLEMS

According to a first aspect of the present invention, there is provided a communication system comprising a communication optimizing apparatus performing, when a user terminal accesses a server via an access-controlled network, settings and processes required for obtaining a permission of using the network.

According to a second aspect of the present invention, there is provided a communication optimizing apparatus comprising control means for performing, when a user terminal accesses a server via an access-controlled network, settings and processes required for obtaining a permission of using the network.

According to a third aspect of the present invention, there is provided a communication network establishing method comprising causing an apparatus to perform, upon receiving a request to access a server from a user terminal, settings and processes required for obtaining a permission of using an access-controlled network via which the server is accessed.

### MERITORIOUS EFFECTS OF THE INVENTION

Based on the configurations and operations as described above, according to the present invention, the user can perform communication via lines of a carrier network, without installing any dedicated applications or performing any special settings to his or her terminal.

### BRIEF DESCRIPTION OF THE DRAWINGS

Fig. 1 is a block diagram illustrating a configuration example of a communication system according to a first exemplary embodiment of the present invention.
Fig. 2 is a block diagram illustrating a detailed configuration of a communication optimizing apparatus of Fig. 1.
Fig. 3 is a sequence chart illustrating an operation of the communication system according to the first exemplary embodiment of the present invention.
Fig. 4 is a sequence chart illustrating an operation of the communication system according to the first exemplary embodiment of the present invention.
Fig. 5 is a block diagram illustrating a configuration of a communication system according to a second exemplary embodiment of the present invention.
Fig. 6 is a block diagram illustrating a detailed configuration of a communication optimizing apparatus of Fig. 5.
Fig. 7 is a sequence chart illustrating an operation of the communication system according to the second exemplary embodiment of the present invention.
Fig. 8 is a sequence chart illustrating an operation of the communication system according to the second exemplary embodiment of the present invention.
Fig. 9 is a block diagram illustrating a configuration example of a communication system according to a third exemplary embodiment of the present invention.
Fig. 10 is a block diagram illustrating a configuration example of a communication system according to a fourth exemplary embodiment of the present invention.
Fig. 11 is a block diagram illustrating a configuration example of a communication system in relation to the present invention.

### EXPLANATIONS OF SYMBOLS

- 1: Web server
- 1a: FTP server
- 3, 3-1 to 3-4: PC terminal
- 4, 4a to 4c: communication optimizing apparatus
- 5: SIP-UA
- 6: contents
- 11: service provider application
- 12: SIP-UA
- 13, 32-1, 32-2: http
- 14: SIP-UAS module
- 15: Web server module
- 16: FTP server module
- 21: SIP server
- 22, 23: router
- 31-1, 31-2: Web application
- 31,31-3,31-4: Web browser
- 41: domain name-SIP-URI table
- 42: control module
- 42a: session management unit
- 43: server information managing apparatus
- 44: SIP-UAC module
- 45: HTTP proxy module
- 46: server information managing apparatus client module
- 47: FTP proxy module
- 100: user network
- A: service provider
- B: carrier

### PREFERRED MODES FOR CARRYING OUT THE INVENTION

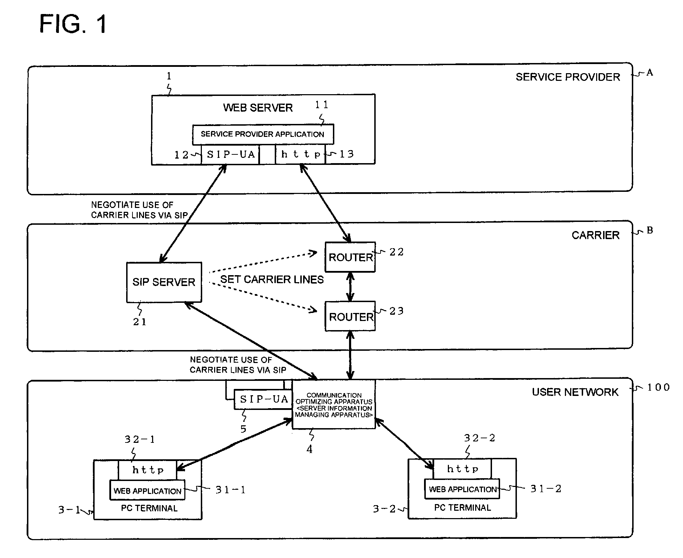

Exemplary embodiments of the present invention will be hereinafter described with reference to the drawings. Fig. 1 is a block diagram illustrating a configuration example of a communication system according to a first exemplary embodiment of the present invention. In Fig. 1, the communication system according to the first exemplary embodiment of the present invention is a system in which Web browsers (Web applications 31-1 and 31-2) of personal computer (PC) terminals 3-1 and 3-2 in a user network 100 perform hyper text transfer protocol (HTTP) communication with a Web server 1 of a service provider A that can be accessed via lines of a carrier network.

The service provider A has the Web server 1, and the Web server 1 includes a service provider application 11, a session initiation protocol-user agent (SIP-UA) 12, and an http 13. A carrier B includes a SIP server 21 and routers 22 and 23.

The PC terminals 3-1 and 3-2 in the user network 100 include Web applications 31-1 and 31-2 and https 32-1 and 32-2, respectively. Further, the user network 100 includes a SIP-UA 5 and a communication optimizing apparatus 4 that includes a server information managing apparatus.

Client applications such as Web browsers (Web applications 31-1 and 31-2) used by users to refer to contents in the Web server 1 operate on the PC terminal 3-1 and 3-2. The PC terminals 3-1 and 3-2 are connected to the communication optimizing apparatus 4. The connection may be made directly and physically via a local area network (LAN) cable or logically via a communication network.

When a client application such as a Web browser attempts to access the Web server 1 that can be accessed via lines of a carrier network, the communication optimizing apparatus 4 automatically performs processes to access the Web server 1. After access is established, the communication optimizing apparatus 4 operates as a proxy server that mediates communication between the client application such as a Web browser and the Web server 1.

Information necessary for the processes to access the Web server 1 is acquired from the server information managing apparatus. Further, when it is determined that communication with the Web server 1 is terminated, the SIP session established between a SIP-user agent client (UAC) module of the communication optimizing apparatus 4 and a SIP-user agent server (UAS) of the Web server 1 is cut off, and unnecessary SIP resources are appropriately released. In response to the request from the communication optimizing apparatus 4, the server information managing apparatus manages and provides information necessary to make lines of the carrier network available.

The SIP server 21 operates as a proxy when a session between the SIP-UAC and the SIP-UAS is established. By establishing a SIP session via the SIP server 21 in the carrier network, lines of the carrier network are made available. In the present exemplary embodiment, the SIP-UAC and the SIP-UAS are included in the communication optimizing apparatus 4 and the Web server 1, respectively.

The routers 22 and 23 relay data transmitted through the network to other networks. When the SIP server 21 establishes a session in the carrier network, the routers 22 and 23 open lines connected to the Web server 1, whereby HTTP communication is enabled.

The Web server 1 is a server on which an HTTP server application such as Apache (free Web server software) operates. The Web server 1 returns a response in response to a request transmitted from a client application such as a Web browser. This Web server 1 is made accessible when a SIP session is established and a permission of using lines of the carrier network is acquired.

As described above, in order to use lines of the carrier network, a permission of using the lines of the carrier network needs to be acquired by establishing a SIP session. Therefore, users of the PC terminals 3-1 and 3-2 need to perform processes necessary for obtaining such permission. However, by introducing the communication optimizing apparatus 4 (server information managing apparatus), the above processes are performed by the communication optimizing apparatus 4, instead of the PC terminals 3-1 and 3-2. Namely, the users of the PC terminal 3-1 and 3-2 can access the Web server 1, without performing processes, such as changing settings of terminals thereof.

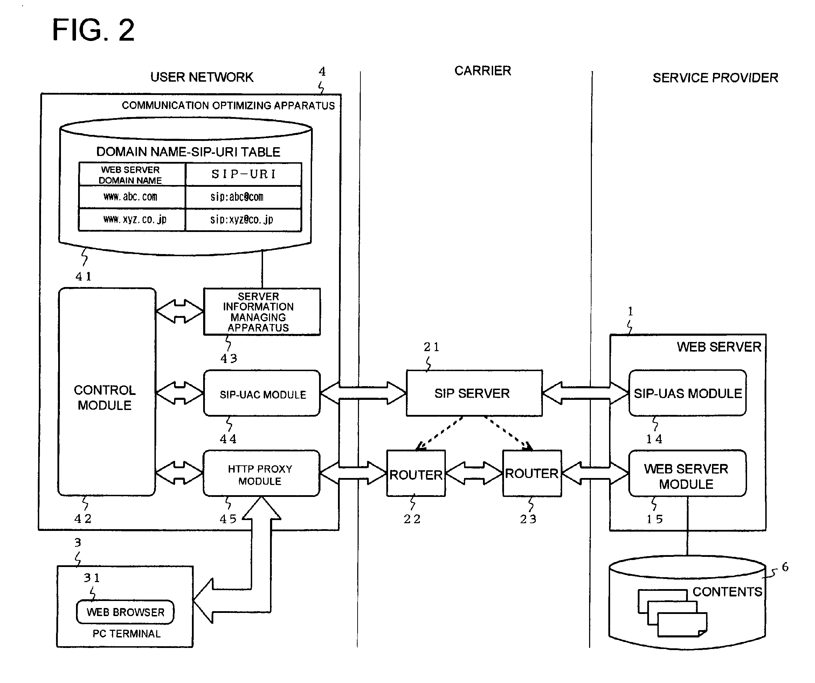

Fig. 2 is a block diagram illustrating a detailed configuration of the communication optimizing apparatus 4 of Fig. 1. In Fig. 2, the communication optimizing apparatus 4 includes a domain name-SIP-uniform resource identifier (URI) table 41 (hereinafter referred to as table 41), a control module 42, a server information managing apparatus 43, a SIP-UAC module 44, and an HTTP proxy module 45. Further, the Web server 1 includes a SIP-UAS module 14 and a Web server module 15 connected to contents 6.

When a user refers to the contents 6 provided by the Web server 1, the user uses an application such as a Web browser 31 that operates on the PC terminal 3. When the Web browser 31 refers to a content 6 of the Web server 1, generally, a URL indicating the location of the content 6 (starting with a schema such as "http:// to" that indicates an execution of HTTP communication) is inputted to the Web browser 31.

The control module 42 of the communication optimizing apparatus 4 is a module that manages each of the modules, that is, the HTTP proxy module 45, the SIP-UAC module 44, and the server information managing apparatus 43. The control module 42 mediates information exchange between other modules.

When the Web browser 31 transmits an HTTP request toward the Web server 1, the HTTP proxy module 45 of the communication optimizing apparatus 4 handles the HTTP request and extracts a server domain name from the URL of the HTTP request.

When a SIP session corresponding to the server domain name is not established yet, the HTTP proxy module 45 transmits the server domain name to the server information managing apparatus 43 and requests the server information managing apparatus 43 to acquire a SIP-URI corresponding to the server domain name.

Further, the HTTP proxy module 45 transmits the acquired SIP-URI to the SIP-UAC module 44 and requests the SIP-UAC module 44 to establish a SIP session. When a SIP session corresponding to the server domain name is already established or when a SIP session has been established through the above process, the HTTP proxy module 45 functions as a normal HTTP proxy and relays HTTP communication.

The server information managing apparatus 43 of the communication optimizing apparatus 4 holds a list of pairs of server domain names and SIP-URIs in the table 41 and provides a SIP-URI corresponding to a server domain name by using the server domain name as a keyword.

The SIP-UAC module 44 of the communication optimizing apparatus 4 establishes a SIP session with a SIP-UAS indicated by the SIP-URI acquired from the server information managing apparatus 43. After the SIP session is established, lines of an access-controlled carrier network are made available, and the Web server 1 is accessed.

The SIP server 21 operates as a SIP proxy when the SIP-UAC requests for establishment of an SIP session with the SIP-UAS indicated by the SIP-URI. At this point, the SIP server 21 issues a control instruction to the carrier network to enable the routers 22 and 23 that relay information to the Web server 1. As a result, when a SIP session is established, communication between the Web browser 31 and the Web server 1 is enabled.

When the SIP-UAS module 14 of the Web server 1 receives the SIP request from the SIP-UAC module 44 of the communication optimizing apparatus 4, the SIP-UAS module 14 communicates and returns a SIP response.

The Web server module 15 of the Web server 1 is a well-known Web server application such as Apache and returns, as an HTTP response, the contents 6 corresponding to the HTTP request transmitted from the Web browser 31 via the HTTP proxy module 45 of the communication optimizing apparatus 4.

In the above example, the application operating on the PC terminal 3 is assumed to be the Web browser 31. However, the type of application is not particularly limited, as long as the application can perform communication based on the HTTP protocol.

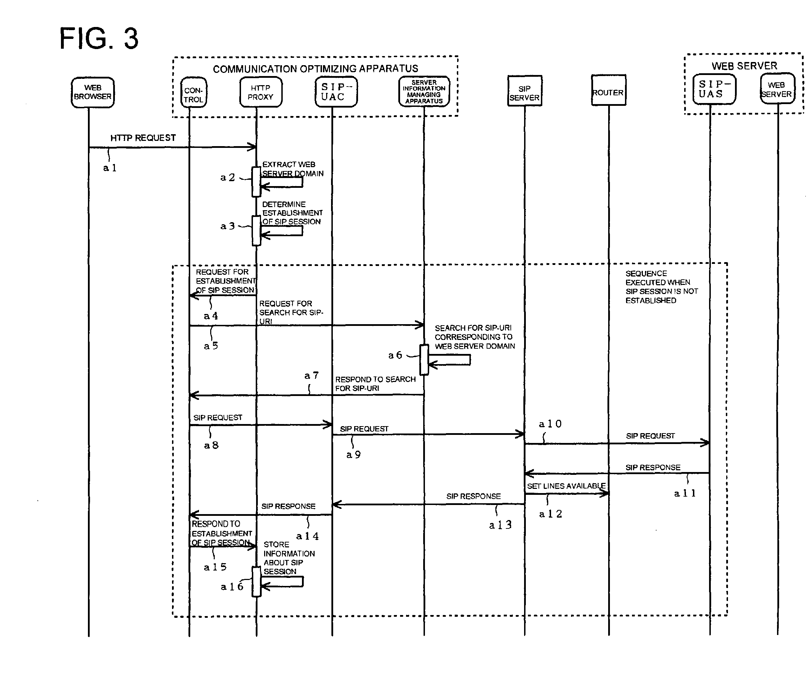

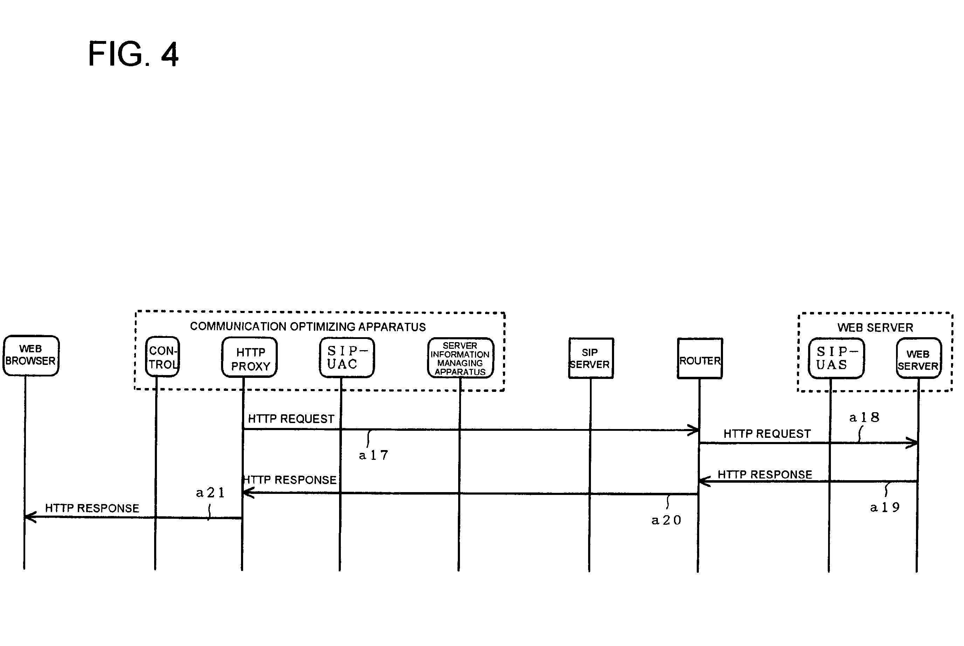

Figs. 3 and 4 are sequence charts illustrating operations of the communication system according to the first exemplary embodiment of the present invention. Operations of the communication system according to the first exemplary embodiment of the present invention will be described with reference to Figs. 2 to 4.

When the Web browser 31 outputs an HTTP request to the Web server 1 (a1 in Fig. 3), the HTTP proxy module 45 of the communication optimizing apparatus 4 connected to the PC terminal 3 handles the HTTP request. The HTTP proxy module 45 analyzes the HTTP request acquired from the Web browser 31 and extracts a server domain name contained in the HTTP request (a2 in Fig. 3).

The HTTP proxy module 45 determines whether the extracted server domain name corresponds to a SIP-URI that currently establishes a SIP session (a3 in Fig. 3). If the HTTP proxy module 45 determines that the server domain name corresponds to a SIP-URI that currently establishes a SIP session, the HTTP proxy module 45 transmits the HTTP request to the Web server 1 via the routers 23 and 22 (a17 and a18 in Fig. 4).

If the HTTP proxy module 45 determines that the server domain name does not correspond to a SIP-URI that currently establishes a SIP session, before accessing the Web server 1, the HTTP proxy module 45 requests the control module 42 to establish a SIP session to make lines of the carrier network available (a4 in Fig. 3).

The control module 42 requests the server information managing apparatus 43 to acquire a SIP-URI necessary to establish a SIP session (a5 in Fig. 3). By using the server domain name as a keyword, the server information managing apparatus 43 searches the table 41 held by the communication optimizing apparatus 4 for a SIP-URI corresponding to the server domain name (a6 in Fig. 3). Next, the server information managing apparatus 43 transmits the acquired SIP-URI to the control module 42 as a response (a7 in Fig. 3).

To establish a SIP session, the control module 42 transmits the SIP-URI acquired from the server information managing apparatus 43 to the SIP-UAC module 44 (a8 in Fig. 3).

To establish a SIP session with the SIP-UAS module 14 of the Web server 1, the SIP-UAC module 44 outputs the SIP request by using the SIP-URI as a destination, and the SIP request is send to the SIP-UAS module 14 via the SIP server 21 in the carrier network (a9 in Fig. 3).

The SIP server 21 that relays the SIP in the carrier network relays the SIP request from the SIP-UAC module 44 and outputs the SIP request to the SIP-UAS module 14 (a10 in Fig. 3).

The SIP server 21 that relays the SIP in the carrier network relays a SIP response from the SIP-UAS module 14 and outputs the SIP response to the SIP-UAC module 44 (a11 in Fig. 3). Upon receiving the SIP response from the SIP-UAS module 14, the SIP server 21 sets the routers 22 and 23 to make lines of the carrier network available (a12 in Fig. 3).

When the SIP-UAC module 44 establishes a SIP session with the SIP-UAS module 14, the SIP-UAC module 44 acquires the SIP response via the SIP server 21 (a13 in Fig. 3). The control module 42 acquires the SIP response to the SIP request that the control module 42 requested the SIP-UAC module 44 to handle (a14 in Fig. 3).

The HTTP proxy module 45 acquires the response to the request for establishment of the SIP session that the HTTP proxy module 45 transmitted to the control module 42 (a15 in Fig. 3). The HTTP proxy module 45 holds information about the established SIP session (a16 in Fig. 3) and uses the information for the determination process in the above a3.

When a SIP session is already established or after a SIP session has been established, the HTTP proxy module 45 outputs an HTTP request to the available routers 22 and 23 (a17 in Fig. 4). The routers 22 and 23 transmit the HTTP request transmitted from the HTTP proxy module 45 to the Web server module 15 (a18 in Fig. 4).

In response to the HTTP request, the Web server module 15 transmits an HTTP response to the routers 22 and 23 (a19 in Fig. 4). The routers 22 and 23 transmit the HTTP response transmitted from the Web server module 15 to the HTTP proxy module 45 (a20 in Fig. 4). The Web browser 31 acquires the HTTP response to the HTTP request that the Web browser 31 transmitted to the HTTP proxy module 45 (a21 in Fig. 4).

Thus, according to the present exemplary embodiment, by allowing the communication optimizing apparatus 4 to automatically perform processes necessary to use lines of a carrier network, the user can perform communication by using the lines of the carrier network, without installing any dedicated applications or performing any special settings to his or her terminal.

Further, according to the present exemplary embodiment, by allowing the server information managing apparatus 43 to manage information necessary to use lines of a carrier network, flexible settings can be made when negotiations about access control to use the lines of the carrier network are carried out.

Further, according to the present exemplary embodiment, the communication optimizing apparatus 4 performs session management. In this way, when lines have become unused when communication is terminated, a SIP session established to make the lines available can be released.

Furthermore, according to the present exemplary embodiment, when a plurality of terminals are connected to the communication optimizing apparatus 4, if one of the terminals has already established a SIP session to access the Web server 1 and other terminals attempt to access the same Web server 1, the SIP session that has already been used can be used to perform communication while saving SIP resources.

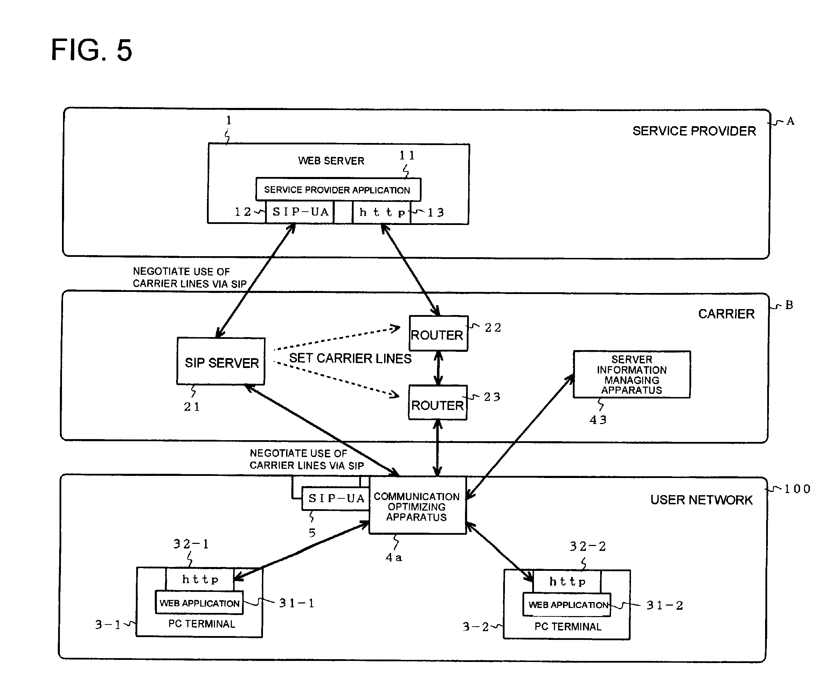

Fig. 5 is a block diagram illustrating a configuration of a communication system according to a second exemplary embodiment of the present invention. In Fig. 5, the communication system according to the second exemplary embodiment of the present invention has the same configuration of that of the communication system according to the first exemplary embodiment of the present invention illustrated in Fig. 1, except that the server information managing apparatus 43 is arranged outside the communication optimizing apparatus 4a. Thus, identical elements are denoted with identical reference characters.

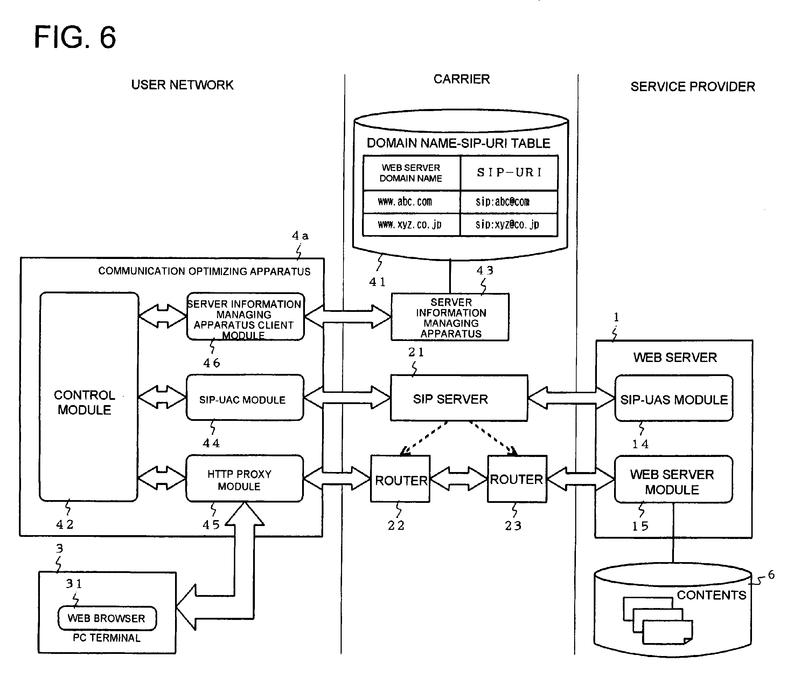

Fig. 6 is a block diagram illustrating a detailed configuration of the communication optimizing apparatus 4a of Fig. 5. While arranged in the communication optimizing apparatus 4 (in the first exemplary embodiment), the server information managing apparatus 43 is arranged outside the communication optimizing apparatus 4a in the present exemplary embodiment as illustrated in Fig. 6. Further, a server information managing apparatus client module 46 that communicates with the server information managing apparatus 43 is arranged in the communication optimizing apparatus 4a.

In response to a request from the control module 42, the server information managing apparatus client module 46 requests the server information managing apparatus 43 to use a server domain name as a keyword and transmit a corresponding SIP-URI. The server information managing apparatus client module 46 transmits the SIP-URI to the control module 42.

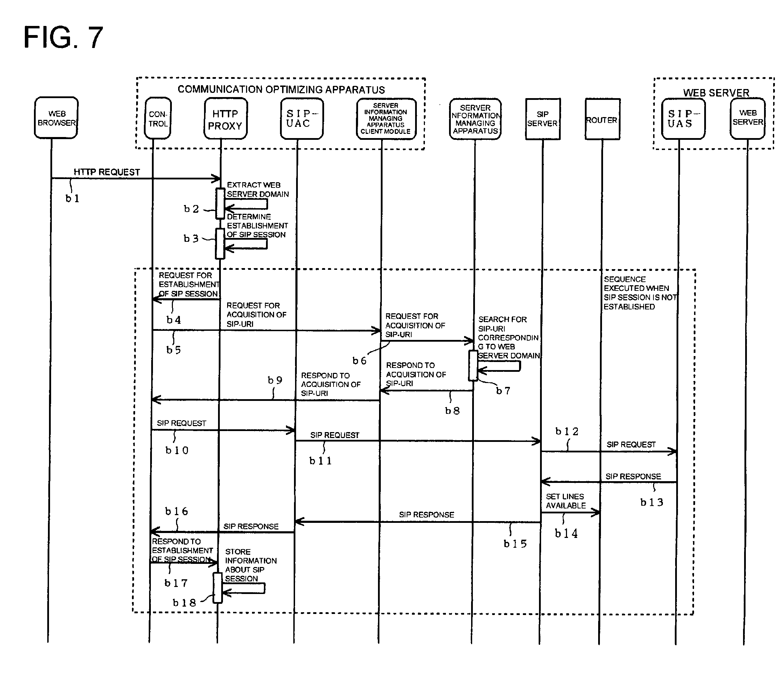

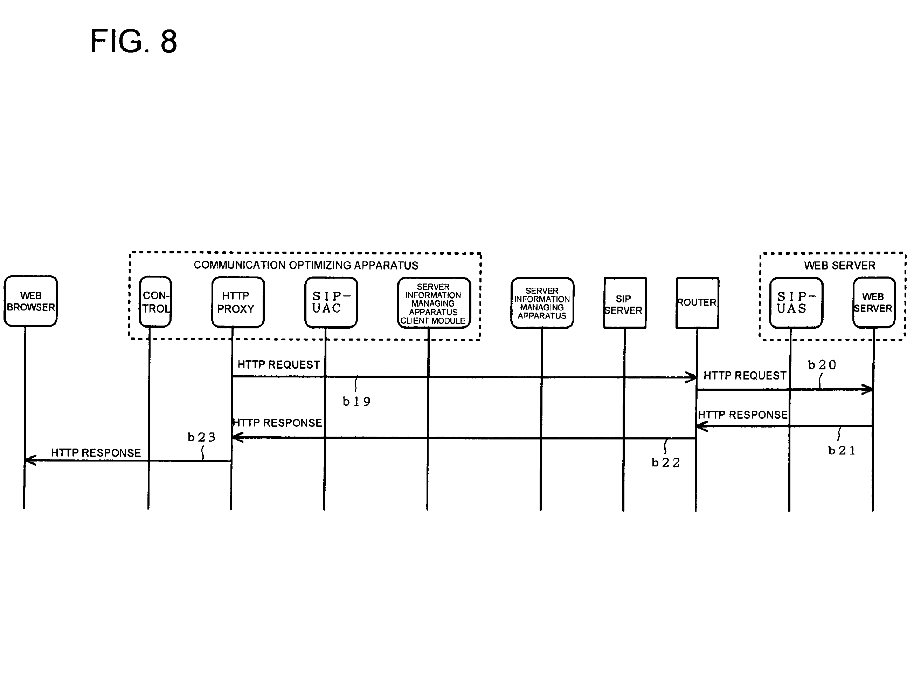

Figs. 7 and 8 are sequence charts illustrating operations of the communication system according to the second exemplary embodiment of the present invention. Operations of the communication system according to the second exemplary embodiment of the present invention will be described with reference to Figs. 6 to 8. Since the processes b1 to b4 and b10 to b23 in Figs. 7 and 8 are the same as the processes a1 to a4 and a8 to a21 in Figs. 3 and 4, descriptions of these identical processes will be omitted herein.

The control module 42 requests the server information managing apparatus client module 46 to acquire a SIP-URI necessary to establish a SIP session (b5 in Fig. 7). The server information managing apparatus client module 46 communicates with the server information managing apparatus 43 arranged outside the communication optimizing apparatus 4a and requests the server information managing apparatus 43 to acquire the SIP-URI by using a server domain name as a keyword (b6 in Fig. 7).

The server information managing apparatus 43 uses a server domain name as a keyword and searches the table 41 arranged outside the communication optimizing apparatus 4a for a SIP-URI corresponding to the server domain name (b7 in Fig. 7). The server information managing apparatus 43 transmits the acquired SIP-URI to the server information managing apparatus client module 46 as a response (b8 in Fig. 7). The server information managing apparatus client module 46 transmits the SIP-URI obtained by the search executed by the server information managing apparatus 43 to the control module 42 as a response (b9 in Fig. 7).

In this way, the present exemplary embodiment can provide the same effect as those provided by the above first exemplary embodiment of the present invention.

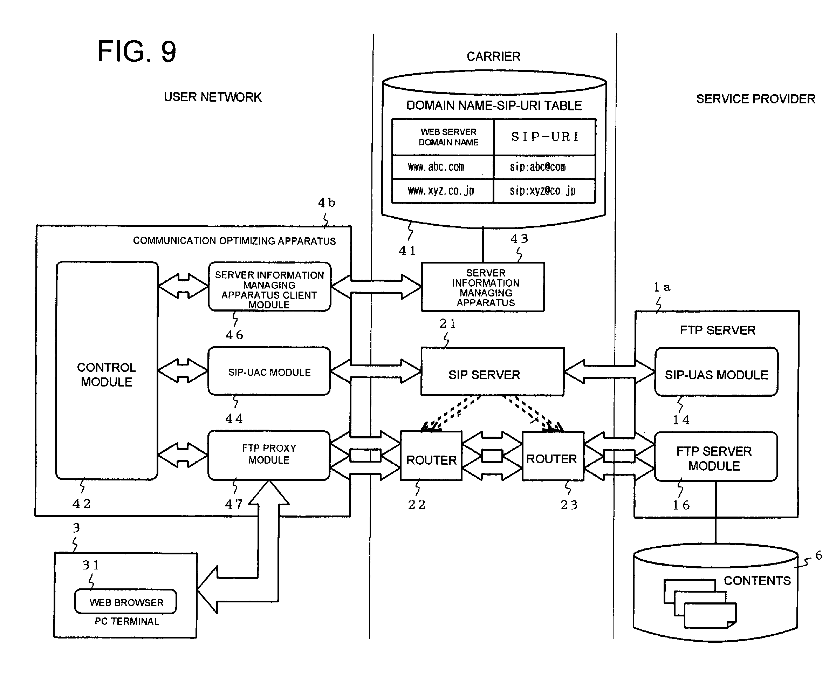

Fig. 9 is a block diagram illustrating a configuration example of a communication system according to a third exemplary embodiment of the present invention. According to the third exemplary embodiment of the present invention, the protocol module is different.

The HTTP proxy module 45 is mounted on the communication optimizing apparatuses 4 and 4a in the above first and second exemplary embodiments of the present invention, respectively, to perform HTTP communication, and a URL starting with "http://" or the like is inputted to the Web browser 31 to access the Web server 1.

In contrast, in the present exemplary embodiment, an FTP proxy module 47 is mounted on a communication optimizing apparatus 4b to perform FTP communication, and a URL starting with "ftp://" or the like is inputted to access an FTP server 1a.

FTP communication uses a control connection and a data connection. Thus, when a SIP session is established, the SIP server 21 sets each of the routers 22 and 23 to use two lines. To perform this setting, the SIP-UAC module 44 sets information for two lines in a SIP request outputted to the SIP-UAS module 14.

Thus, according to the present exemplary embodiment, even when communication is performed with a protocol other than HTTP, by mounting a communication module corresponding to the protocol on the communication optimizing apparatus 4b, the user can perform communication by using lines of a carrier network, without performing any special settings.

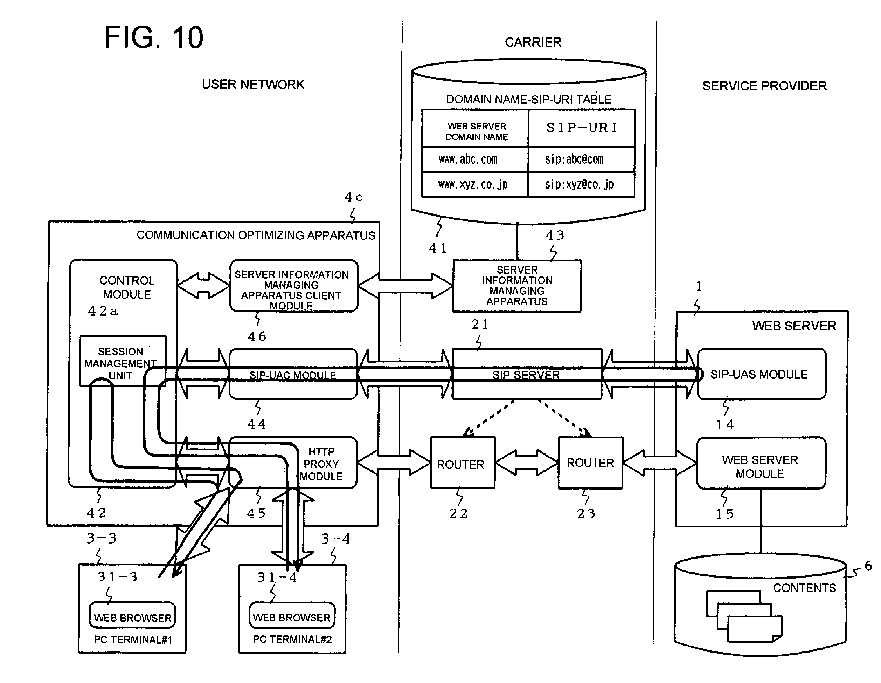

Fig. 10 is a block diagram illustrating a configuration example of a communication system according to a fourth exemplary embodiment of the present invention. According to the fourth exemplary embodiment of the present invention, the session management executed in the communication optimizing apparatus 4c is different, as illustrated in Fig. 10.

While an example where a single PC terminal 3 is connected to the communication optimizing apparatuses 4, 4a, and 4b is described in the above first to third exemplary embodiments of the present invention, respectively, an example where a plurality of PC terminals (#1 and #2) 3-3 and 3-4 are connected to the communication optimizing apparatus 4c will be described in the present exemplary embodiment.

The control module 42 includes a session management unit 42a. After the PC terminal (#1) 3-3 establishes a SIP session with the SIP-UAS module 14 to access the Web server 1, when the PC terminal (#2) 3-4 attempts to access the same Web server 1, the session management unit 42a checks whether a session based on a SIP-URI used to establish a SIP session has already been established. If it is determined that such session has already been established, the Web server 1 is accessed by using existing available lines, without establishing a new SIP session.

While a plurality of PC terminals (#1 and #2) 3-3 and 3-4 are connected to the communication optimizing apparatus 4c according to the present exemplary embodiment, when a plurality of Web browsers are run on a single terminal to access the Web server 1, the Web server 1 is accessed in a manner similar to the above.

In a fifth exemplary embodiment of the present invention, an example where the type of information acquired from the server information managing apparatus 43 is different will be described. According to the above first and second exemplary embodiment of the present invention, a server domain name is transmitted to the server information managing apparatus 43 to acquire a SIP-URI associated with the server domain name. However, according to the present exemplary embodiment, information other than the SIP-URI is also acquired (FQDN, data size, data type, and the like, for example).

Since the information acquired from the server information managing apparatus 43 is the SIP-URI alone in the first and second exemplary embodiments of the present invention, regarding other settings for lines used for communication (communication bandwidth and the like, for example), default settings specified by the carrier are applied. According to the present exemplary embodiment, by allowing the server information managing apparatus 43 to have other information and acquire all information relating to a server domain name, settings for lines used to communicate with the Web server 1 can be made more flexibly.

In a sixth exemplary embodiment of the present invention, an example where the server information managing apparatus 43 is provided with information about a provider of the Web server 1 will be described. According to the above first and second exemplary embodiments of the present invention, a server domain name is transmitted to the server information managing apparatus 43 to acquire a SIP-URI associated with the server domain name. However, according to the present exemplary embodiment, other than the SIP-URI, information about a provider of the Web server 1 to be accessed is also acquired.

According to the first and second exemplary embodiments of the present invention, the information acquired from the server information managing apparatus 43 is the SIP-URI alone, and connection is made automatically without examining reliability of the server to be accessed. According to the present exemplary embodiment, information about the server to be accessed (company description, address, telephone number, and the like, for example) is first presented to the user, and the user can determine whether to access the Web server 1 by checking the contents of the information. In this way, the user can avoid accessing unintended sites.

According to a seventh exemplary embodiment of the present invention, an example where the server information managing apparatus 43 is provided with site reliability information will be described. While the information about the provider of the Web server 1 to be accessed is acquired from the server information managing apparatus 43 according to the above sixth exemplary embodiment of the present invention, other than the SIP-URI, information indicating whether the site is reliable or unreliable is acquired according to the present exemplary embodiment.

According to the sixth exemplary embodiment of the present invention, the provider information about the Web server 1 to be accessed is acquired and is then presented to the user, and the user determines whether to access the site. However, according to the present exemplary embodiment, by acquiring information about reliability of the site to be accessed and using the information as a criterion, access to the Web server 1 can be controlled automatically.

If the Web server 1 to be accessed is reliable, the access processing is automatically continued. If the Web server 1 to be accessed is not reliable or the reliability thereof is uncertain, the access processing is automatically discontinued or the user is asked whether to continue the processing, for example. In this way, safety can be enhanced.

In an eighth exemplary embodiment of the present invention, an example where the Web server 1 notifies the communication optimizing apparatus 4 of a cutting-off of a SIP session will be described. According to the present exemplary embodiment, when the Web server 1 side cuts off a SIP session, the communication optimizing apparatus 4 destroys a SIP-URI managed therein and releases resources held for the SIP-URI.

Further, according to the present exemplary embodiment, communication of other processes accessing the Web server 1 with the SIP-URI is also cut off (when a plurality of Web browsers accessing the same Web server 1 are being run, for example).

As described above, according to the present invention, when a user terminal (PC terminal 3 and 3-1 to 3-4) accesses a content server (Web server 1) via an access-controlled network that can be made available by obtaining a permission, since the content server can be accessed automatically by the communication optimizing apparatus 4, the user does not need to perform any settings, processes, or the like required for obtaining the permission.

The communication optimizing apparatus 4 centrally manages communication between a user terminal and a server. When the user terminal accesses the server, the communication optimizing apparatus 4 handles the communication therebetween, and after establishing a SIP connection required to access the server, the communication optimizing apparatus 4 mediates the communication between the user terminal and the server as a proxy server.

Additionally, the present invention provides the server information managing apparatus 43 that manages information required to establish the above SIP session and provides information corresponding to a request from the communication optimizing apparatus 4.

According to the present invention, by using a combination of these apparatuses (the communication optimizing apparatus 4 and the server information managing apparatus 43), a user of a user terminal or the like can automatically access a server, without performing any processes required to establish a SIP session. INDUSTRIAL APPLICABILITY

The present invention can be applied to a system, such as a next generation network (NGN), in which access control is required in the use of lines of a carrier network when a content server is accessed. Further, the present invention can be applied to a system in which detailed settings for the access control negotiation are possible or required. Modifications and adjustments of the exemplary embodiments and examples are possible within the scope of the overall disclosure (including claims) of the present invention and based on the basic technical concept of the present invention. Various combinations and selections of various disclosed elements are possible within the scope of the claims of the present invention.

## Claims

1. A communication system, comprising:
a communication optimizing apparatus performing, when a user terminal accesses a server via an access-controlled network, settings and processes required for obtaining a permission of using the network.

2. The communication system according to claim 1, wherein the communication optimizing apparatus performs a negotiation so that lines of the network are made available when the user terminal accesses the server.

3. The communication system according to claim 1 or 2, further comprising a server information managing apparatus providing the communication optimizing apparatus with information required to use lines of the network.

4. The communication system according to claim 3, wherein the communication optimizing apparatus acquires information used to obtain a permission of using lines of the network from the server information managing apparatus, acquires a permission of using the network based on the information, and makes the lines of the network available.

5. The communication system according to any one of claims 1 to 4, wherein, when a plurality of communications are performed with a single server at the same time, the communication optimizing apparatus connects some of the communications to the server by using a session established by the same permission of using the network.

6. The communication system according to claim 5, wherein, when a communication with the server is terminated, the communication optimizing apparatus releases line resources of the network by cutting off the session.

7. The communication system according to claim 5 or 6, wherein the communication optimizing apparatus releases line resources that have become unused when the server side cuts off the session.

8. A communication optimizing apparatus, comprising:
control means for performing, when a user terminal accesses a server via an access-controlled network, settings and processes required for obtaining a permission of using the network.

9. The communication optimizing apparatus according to claim 1, wherein the control means performs a negotiation so that lines of the network are made available when the user terminal accesses the server.

10. The communication optimizing apparatus according to claim 8 or 9, wherein the control means is supplied with information required to use lines of the network from a server information managing apparatus.

11. The communication optimizing apparatus according to claim 10, wherein the control means acquires information used to obtain a permission of using lines of the network from the server information managing apparatus, acquires a permission of using the network based on the information, and makes the lines of the network available.

12. The communication optimizing apparatus according to any one of claims 8 to 11, wherein, when a plurality of communications are performed with a single server at the same time, the control means connects some of the communications to the server by using a session established by the same permission of using the network.

13. The communication optimizing apparatus according to claim 12, wherein, when a communication with the server is terminated, the control means releases line resources of the network by cutting off the session.

14. The communication optimizing apparatus according to claim 12 or 13, wherein the control unit releases line resources that have become unused when the server side cuts off the session.

15. A communication network establishing method, comprising:
causing an apparatus to perform, upon receiving a request to access a server from a user terminal, settings and processes required for obtaining a permission of using an access-controlled network via which the server is accessed.

16. The communication network establishing method according to claim 15, wherein the apparatus performs a negotiation so that lines of the network are made available when the user terminal accesses the server.

17. The communication network establishing method according to claim 15 or 16, wherein the apparatus acquires information required to use lines of the network from a server information managing apparatus arranged in the communication system.

18. The communication network establishing method according to claim 17, wherein the apparatus acquires information used to obtain a permission of using lines of the network from the server information managing apparatus, acquires a permission of using the network based on the information, and makes the lines of the network available.

19. The communication network establishing method according to any one of claims 15 to 18, wherein, when a plurality of communications are performed with a single server at the same time, the apparatus connects some of the communications to the server by using a session established by the same permission of using the network.

20. The communication network establishing method according to claim 19, wherein, when a communication with the server is terminated, the apparatus releases line resources of the network by cutting off the session.

21. The communication network establishing method according to claim 19 or 20, wherein the apparatus releases line resources that have become unused when the server side cuts off the session.
